# EUROPÄISCHE PATENTSCHRIFT

(11) **EP 0 641 945 B1**
(45) Veröffentlichungstag und Bekanntmachung des Hinweises auf die Patenterteilung: **20.11.1996**
(21) Anmeldenummer: 94100905.2
(22) Anmeldetag: 22.01.1994
(51) Int. Cl.: F16C 1/22, F16C 1/12

(54) **Betätigungszug für die Betätigung von Einrichtungen insbesondere in Fahrzeugen**
Control cable for actuation of vehicle devices
Commande par câble pour l'actionnement d'organes en particulier dans un véhicule

(30) Priorität: 07.09.1993 DE 9313484 U
(43) Veröffentlichungstag der Anmeldung: 08.03.1995
(73) Patentinhaber: VOFA-WERK XAVIER VORBRÜGGEN GmbH & Co. KG, D-40549 Düsseldorf (DE); Ford-Werke Aktiengesellschaft, 50735 Köln (DE)
(72) Erfinder: Obrhausen, Anton, D-41844 Wegberg (DE); Kiel, Wolfgang, D-51491 Overath (DE)
(74) Vertreter: Paul, Dieter-Alfred, Dipl.-Ing.

(56) Entgegenhaltungen:
- DE-U- 9 304 462
- FR-A- 864 334
- US-A- 5 156 064

## Beschreibung

Die Erfindung betrifft einen Betätigungszug für die Betätigung von Einrichtungen insbesondere in Fahrzeugen, z. B. von Getrieben, Drosselklappen, Schlössern oder dergleichen, mit folgenden Merkmalen:
a) der Betätigungszug weist einen axial beweglichen Übertragungsstrang für die Kraftübertragung auf;
b) der Übertragungsstrang ist jeweils über seine Endabschnitte mit Verbindungsstücken zur Verbindung des Übertragungsstrangs einerends mit einem Betätigungsorgan und anderenends mit einem zu betätigenden Organ verbunden;
c) wenigstens einer der Verbindungsstücke hat einen Eingriffsabschnitt, der mit Eingriffselementen versehen ist;
d) der zu dem Verbindungsstück gehörende Endabschnitt weist zu den Eingriffselementen des Verbindungsstücks komplementäre Eingriffselemente auf;
e) der Übertragungsstrang und das Verbindungsstück mit dem Eingriffsabschnitt sind in nicht verbundenem Zustand axial zueinander beweglich und im verbundenen Zustand axial zueinander unbeweglich;
f) es ist eine Blockierhülse vorgesehen, die aus einer Freigabestellung, in der Verbindungsstück und Endabschnitt miteinander in Eingriff bringbar sind, über den Eingriffsabschnitt bewegbar ist und in dieser Blockierstellung die Eingriffselemente von Endabschnitt und Verbindungsstück in Eingriff hält.

Zur Betätigung von Einrichtungen insbesondere von Kraftfahrzeugen werden in einer Vielzahl von Anwendungsfällen sogenannte Betätigungszüge verwendet. Sie weisen jeweils einen flexiblen Betätigungsmantel und eine darin axial geführte Betätigungsseele - meist in Form eines als Seil oder Litze ausgebildeten Betätigungsdrahtes - als Übertragsstrang auf. An beiden Enden des Betätigungsmantels sind meist aus Metall bestehende Befestigungshülsen vorgesehen, die Befestigungsmittel aufweisen, mit denen der Betätigungsmantel an seinen Enden mit entsprechenden Halterungen an dafür vorgesehenen Bauteilen des Kraftfahrzeuges fixiert werden kann. Der Übertragungsstrang ragt an beiden Enden mit Endabschnitten aus den jeweiligen Befestigungshülsen heraus.

An zumindest einem Endabschnitt ist ein Verbindungsstück fixiert, das beispielsweise mit einer Kugelpfanne versehen sein kann, über die dann eine Verbindung zu entweder einem Betätigungsorgan, beispielsweise einem Schalthebel, oder einem zu betätigenden Organ, beispielsweise einem Getriebeeingang, verbunden werden kann. An dem anderen Endabschnitt ist ebenfalls ein Verbindungsstück vorgesehen, das jedoch erst bei der Montage des Betätigungszuges mit dem dortigen Endabschnitt des Übertragungsstrangs verbunden wird, und zwar erst dann, wenn der Betätigungszug ansonsten schon fertig montiert, also auch schon das dortige Verbindungsstück mit dem Betätigungsorgan oder dem zu betätigenden Organ verbunden ist. Hierzu ist es erforderlich, daß zunächst eine axiale Beweglichkeit zwischen Übertragungsstrang und dem Verbindungsstück gegeben ist, damit die richtige Länge des Übertragungsstrangs zusammen mit den Verbindungsstücken eingestellt werden kann. Danach werden beide Teile miteinander formschlüssig gekuppelt.

Aus dem DE-U-93 0̸4 462.3 ist ein Betätigungszug der eingangs genannten Art bekannt, bei dem die formschlüssige Verbindung von Verbindungsstück und zugehörigem Endabschnitt über einen Eingriffsabschnitt am Verbindungsstück geschieht, der mit Eingriffselementen versehen ist. Der zu diesem Verbindungsstück gehörende Endabschnitt weist zu den Eingriffselementen des Verbindungsstücks komplementäre Eingriffselemente auf. Dabei ist der Eingriffsabschnitt als Eingriffstülle mit innenseitigen Eingriffelementen ausgebildet, die derart radial beweglich sind, daß der Endabschnitt des Übertragungsstrangs in die Eingriffstülle einschiebbar ist. Damit die formschlüssige Verbindung sich nicht selbsttätig lösen kann, ist eine Blockierhülse vorgesehen, die über die Eingriffstülle schiebbar und derart bemessen ist, daß die Eingriffselemente der Eingriffstülle beim Überschieben der Blockierhülse in Eingriff mit den Eingriffselementen des Endabschnittes des Übertragungsstrangs kommen. In Sonderheit ist die Eingriffstülle zum freien Ende hin maulartig geöffnet, wobei die Blockierhülse die Teile der Eingriffstülle schließt, wenn sie darübergeschoben wird.

Nachteilig bei dieser Art der Verbindung ist, daß die Handhabung des tüllenförmigen Eingriffsabschnittes nicht einfach ist, da die Schenkel der Tülle zunächst von Hand zusammengeführt und erst dann die Blockierhülse übergeschoben werden kann. Dies ist, wenn auf dem Übertragungsstrang Zug steht, schwierig zu handhaben und führt auch zu Fehlmontagen.

Der Erfindung liegt die Aufgabe zugrunde, einen Betätigungszug der eingangs genannten Art so zu gestalten, daß die Montage sicherer und leichter und daß die Konstruktion einfacher ist.

Diese Aufgabe wird erfindungsgemäß durch einen Betätigungszug mit folgenden Merkmalen gelöst:
g) der Eingriffsabschnitt ist als formstabile Eingriffshülse ausgebildet;
h) die Eingriffshülse hat seitlich einen Axialschlitz, über den der Endabschnitt in die Eingriffshülse einführbar ist.

Nach der Erfindung kann der Endabschnitt des Übertragungsstrangs radial in den als Eingriffshülse ausgebildeten Eingriffsabschnitt eingeführt werden, wobei mit dem Einführen sofort eine formschlüssige Verbindung zwischen den Eingriffselementen hergestellt wird. Dies kann ohne Schwierigkeiten auch unter Zugbelastung des Übertragungsstrangs geschehen. Die Blockierhülse ist für den Eingriff der Eingriffselemente nicht erforderlich. Sie hat nur noch Sicherungsfunktion, indem sie eine radiale Bewegung des Endabschnittes in Richtung des Axialschlitzes verhindert. Dabei zeichnet sich die erfindungsgemäße Lösung auch durch konstruktive Einfachheit aus.

In Ausbildung der Erfindung ist vorgesehen, daß der Axialschlitz eine geringere Breite als der Endabschnitt hat und seine Begrenzungswände derart elastisch ausgebildet sind, daß der Endabschnitt unter Aufweitung des Axialschlitzes in die Eingriffshülse einführbar ist. Diese Ausbildung hat den Vorzug, daß zwar das Einführen des Endabschnittes etwas erschwert wird, gleichzeitig jedoch eine Rastfixierung des Endabschnittes erfolgt, wenn er seine Eingriffsstellung erreicht hat und die Begrenzungswände des Axialschlitzes wieder zurückfedern. Ein selbsttätiges Herausspringen des Endabschnittes durch den Axialschlitz ist dann nur mit erhöhtem Kraftaufwand möglich.

In weiterer Ausgestaltung der Erfindung ist vorgesehen, daß die Blockierhülse einen in den Axialschlitz einfassenden, bis zur Außenseite des Endabschnitts reichenden Blockiersteg aufweist. Dabei ist es von Vorteil, wenn der Axialschlitz im Bereich der Freigabestellung der Blockierhülse derart verbreitet ist, daß die Blockierhülse mit dem Blockiersteg in die Verbreitung verdrehbar ist. Nach dieser Verdrehung ist die Blockierhülse in der Freigabestellung blockiert, rutscht also nicht von selbst in den Bereich des Eingriffes zwischen Endabschnitt und Eingriffshülse.

Die Blockierhülse sollte vorzugsweise axial verschieblich auf dem Verbindungsstück geführt sein. Auch ist es zweckmäßig, daß die Eingriffshülse an dem dem Übertragungsstrang zugewandten Ende des Verbindungsstückes angeordnet ist.

Die Eingriffselemente sind in an sich bekannter Weise als axial hintereinander angeordnete Eingriffsrippen ausgebildet. Sie sollten sich über den gesamten Außenumfang des Endabschnittes bzw. den Innenumfang der Eingriffshülse erstrecken, wobei jeweils möglichst eine Vielzahl von Eingriffsrippen auf beiden Seiten in Eingriff befindlich sein sollten.

Nach einem weiteren Merkmal der Erfindung ist vorgeschlagen, daß der Endabschnitt eine in die Eingriffshülse einfassende Verdickung aufweist und die Eingriffshülse zum offenen Ende hin einen Anschlag für die Verdickung hat. Dieser Anschlag kann als Notanschlag für den Fall, daß die Eingriffselemente nicht genügend Halt bieten, dienen. Dabei kann der Anschlag in dem offenen Ende der Eingriffshülse sitzen, beispielsweise in Form einer entsprechenden Verengung.

Die Blockierhülse ist in an sich bekannter Weise in Richtung auf die Blockierstellung federbeaufschlagt, um die Blockierhülse in der Blockierstellung zu halten.

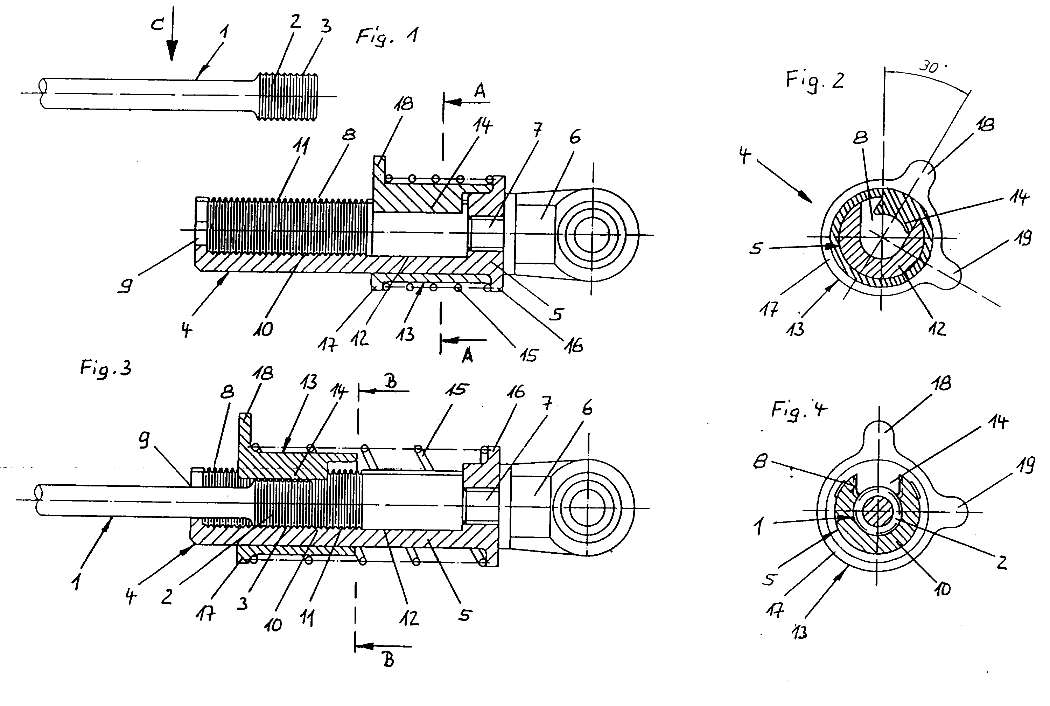

In der Zeichnung ist die Erfindung an Hand eines Ausführungsbeispiels näher veranschaulicht. Es zeigen:
- Figur (1): die Seitenansicht eines Endabschnittes eines Übertragungsstrangs und einen Querschnitt des zugehörigen Verbindungsstückes in nicht verbundenem Zustand;
- Figur (2): einen Querschnitt durch das Verbindungsstück gemäß Figur (1) in der Ebene A-A;
- Figur (3): die Seitenansicht bzw. Querschnittsdarstellung gemäß Figur (1) in verbundenem Zustand von Endabschnitt und Verbindungsstück und
- Figur (4): einen Querschnitt durch das Verbindungsstück gemäß Figur (3) in der Ebene B-B.

In den Figuren (1) und (3) ist linksseitig ein Endabschnitt (1) gezeigt, der über ein hier nicht dargestelltes Gewinde oder eine Preßstelle mit einem ebenfalls nicht gezeigten Übertragungsstrang verbindbar ist. Der Endabschnitt (1) weist einen Rippenabschnitt (2) auf, der verdickt ausgebildet ist und eine Vielzahl von Eingriffsrippen - beispielhaft mit (3) bezeichnet - aufweist.

Dem Endabschnitt (1) zugeordnet ist ein Verbindungsstück (4). Es ist zusammengesetzt aus einer Eingriffshülse (5) und einem daran anschließenden Kugelpfannenelement (6), wobei beide über einen Gewindebolzen (7) miteinander verschraubt sind. Über das Kugelpfannenelement (6) kann das Verbindungsstück (4) mit dem Kugelkopf eines Betätigungsorgans oder eines zu betätigenden Organs verbunden werden.

Die Eingriffshülse (5) weist einen Axialschlitz (8) auf, der sich nahezu über die gesamte Länge der Einriffshülse (5) bis zu deren freien Ende hin erstreckt. Dort hat die Eingriffshülse (5) eine Bohrung (9).

Die Eingriffshülse (5) weist jeweils linksseitig einen Eingriffsabschnitt (10̸) auf, dessen Innenseite mit einer Vielzahl von Eingriffsrippen (11) versehen ist. Die Eingriffsrippen (11) entsprechen komplementär den Eingriffsrippen (3) am Endabschnitt (1). An den Eingriffsabschnitt (10̸) schließt sich ein zweiter Abschnitt (12) an. In diesem zweiten Abschnitt (12) ist der Axialschlitz (8) erheblich verbreitert, wie sich aus dem Vergleich der Schnitte in den Figuren (2) und (4) ersehen läßt.

Die Eingriffshülse (5) ist von einer Blockierhülse (13) umgeben. Sie ist auf der Außenseite der Eingriffshülse (5) verschieblich geführt. Die Blockierhülse (13) weist einen nach innen in den Axialschlitz (8) hineinragenden Blockiersteg (14) auf. Auf diese Weise ist die Blockierhülse (13) im Bereich des Eingriffsabschnittes (10̸) verdrehfest geführt. Im Bereich außerhalb des Eingriffsabschnittes (10̸), also im zweiten Abschnitt (12), wo der Axialschlitz (8) verbreitert ist, kann die Blockierhülse (13) um einen Winkel von 30̸° verdreht werden, wie aus Figur (2) zu ersehen ist. In der verdrehten Stellung bildet der verengte Teil des Axialschlitzes (8) im Bereich des Eingriffsabschnittes (10̸) einen Anschlag für den Blockiersteg (14), der die Blockierhülse (13) daran hindert, sich in Richtung auf den Eingriffsabschnitt (10̸) zu bewegen.

Die Blockierhülse (13) ist von einer auf Druck beanspruchten Schraubenfeder (15) umgeben, welche sich einerends an einem an der Eingriffshülse (5) angeformten Ringsteg (16) und anderenends an einem Ringsteg (17) der Blockierhülse (13) abstützt. Dieser Ringsteg (17) hat zwei nach außen vorspringende Ohren (18, 19), die eine Handhabung zwecks Verdrehung der Blockierhülse (13) in der in Figur (1) dargestellten Freigabeposition, d.h. dort, wo der Axialschlitz (8) verbreitert ist, ermöglicht.

In Figur (1) sind Endabschnitt (1) und Verbindungsstück (4) noch nicht miteinander gekuppelt. Der Eingriffsabschnitt (10̸) ist von der Blockierhülse (3) freigehalten, weil diese im Bereich des verbreiterten Abschnittes des Axialschlitzes (8) so verdreht ist, daß sie in der Freigabeposition blockiert ist. Für die Verbindung wird der Endabschnitt (1) in Richtung des Pfeils (C), d.h. radial in die Eingriffshülse (5) über den Axialschlitz (8) hineingedrückt. Wie aus Figur (4) zu ersehen ist, ist der Axialschlitz (8) im

Bereich der Innenseite der Eingriffshülse (5) etwas verengt, so daß der Axialschlitz (8) beim Einführen des Endabschnittes (1) geringfügig elastisch aufgeweitet wird. Nach vollständigem Einführen des Endabschnittes (1) springen die Begrenzungswände des Axialschlitzes (8) wieder zurück, d.h. der Endabschnitt (1) rastet in der Eingriffshülse (5) ein, so daß er nur mit erheblichem Kraftaufwand wieder aus der Eingriffshülse (5) herausbewegt werden kann. Beim Einrasten kommen die Eingriffsrippen (3) des Rippenabschnittes (2) mit den Eingriffsrippen (11) im Eingriffsabschnitt (10̸) in formschlüssigen Eingriff, so daß sich Endabschnitt (1) und Verbindungsstück (4) nicht axial bewegen können. Nach dem Einsetzen des Endabschnittes (1) in den

Eingriffsabschnitt (10̸) wird die Blockierhülse (13) aus der in Figur (2) gezeigten Position um 30̸° entgegen dem Uhrzeigersinn verdreht. Auf diese Weise kommt der Blockiersteg (14) in die axiale Verlängerung des verengten Teils des Axialschlitzes (8) zu liegen, so daß sich er und damit die Blockierhülse (13) über den Eingriffsabschnitt (10̸) unter Einwirkung der Schraubenfeder (15) bewegen können. Die Blockierhülse (13) kommt dabei in die in Figur (3) dargestellte Position zu liegen. Es ist zu sehen, daß der Blockiersteg (14) so weit in den Axialschlitz (8) hineinragt, daß er dem Außenumfang des Rippenabschnittes (2) unmittelbar benachbart ist. Die Blockierhülse (13) stellt in dieser Position eine weitere Sicherung gegen eine Radialbewegung des Endabschnittes (1) gegenüber der Eingriffshülse (5) dar. Für eine eventuelle Demontage kann die Blockierhülse (13) wieder in die in Figur (1) dargestellte Stellung zurückbewegt und so verdreht werden, daß sie in dieser Freigabestellung blockiert ist.

## Patentansprüche

1. Betätigungszug für die Betätigung von Einrichtungen insbesondere in Fahrzeugen mit folgenden Merkmalen:
a) der Betätigungszug weist einen axial beweglichen Übertragungsstrang für die Kraftübertragung auf;
b) der Übertragungsstrang ist jeweils über seine Endabschnitte (1) mit Verbindungsstücken (4) zur Verbindung des Übertragungsstrangs einerends mit einem Betätigungsorgan und anderenends mit einem zu betätigenden Organ verbunden;
c) wenigstens einer der Verbindungsstücke (4) hat einen Eingriffsabschnitt (10̸), der mit Eingriffselementen (11) versehen ist;
d) der zu dem Verbindungsstück (4) mit dem Eingriffsabschnitt (10̸) gehörende Endabschnitt (1) weist zu den Eingriffselementen (11) des Verbindungsstücks (4) komplementäre Eingriffselemente (3) auf;
e) der Übertragungsstrang und das Verbindungsstück (4) mit dem Eingriffsabschnitt (10̸) sind in nicht verbundenem Zustand axial zueinander beweglich und im verbundenen Zustand axial zueinander unbeweglich;
f) es ist eine Blockierhülse (13) vorgesehen, die aus einer Freigabestellung, in der Verbindungsstück (4) und Endabschnitt (1) miteinander in Eingriff bringbar sind, über den Eingriffsabschnitt (10̸) in eine Blockierstellung bewegbar ist und in dieser Blockierstellung die Eingriffselemente (3, 10̸) von Endabschnitt (1) und Verbindungsstück (4) in Eingriff hält; gekennzeichnet durch folgende Merkmale:
g) der Eingriffsabschnitt (10̸) ist als formstabile Eingriffshülse (5) ausgebildet;
h) die Eingriffshülse (5) hat seitlich einen Axialschlitz (8), über den der Endabschnitt (1) in die Eingriffshülse (5) einführbar ist.

2. Betätigungszug nach Anspruch 1,
dadurch gekennzeichnet, daß der Axialschlitz (8) eine geringere Breite als der Endabschnitt (1) hat und seine Begrenzungswände derart elastisch ausgebildet sind, daß der Endabschnitt (1) unter Aufweitung des Axialschlitzes (8) in die Eingriffshülse (5) einführbar ist.

3. Betätigungszug nach Anspruch 1 oder 2,
dadurch gekennzeichnet, daß die Blockierhülse (13) einen in den Axialschlitz (8) einfassenden, bis zur Außenseite des Endabschnitts (1) reichenden Blockiersteg (14) aufweist.

4. Betätigungszug nach Anspruch 3,
dadurch gekennzeichnet, daß der Axialschlitz (8) im Bereich der Freigabestellung der Blockierhülse (13) derart verbreitert ist, daß die Blockierhülse (13) mit dem Blockiersteg (14) in der Verbreiterung verdrehbar ist.

5. Betätigungszug nach einem der Ansprüche 1 bis 4,
dadurch gekennzeichnet, daß die Blockierhülse (13) axial verschieblich auf dem Verbindungsstück (4) geführt ist.

6. Betätigungszug nach einem der Ansprüche 1 bis 5,
dadurch gekennzeichnet, daß die Eingriffshülse (5) an dem dem Übertragungsstrang zugewandten Ende des Verbindungsstückes (4) angeordnet ist.

7. Betätigungszug nach einem der Ansprüche 1 bis 6,
dadurch gekennzeichnet, daß die Eingriffselemente als axial hintereinander angeordnete Eingriffsrippen (3, 11) ausgebildet sind.

8. Betätigungszug nach Anspruch 7,
dadurch gekennzeichnet, daß sich die Eingriffsrippen (3, 11) über den gesamten Außenumfang des Endabschnittes (1) bzw. den Innenumfang der Eingriffshülse (5) erstrecken.

9. Betätigungszug nach einem der Ansprüche 1 bis 8,
dadurch gekennzeichnet, daß der Endabschnitt (1) eine in die Eingriffshülse (5) einfassende Verdickung (2) aufweist und die Eingriffshülse (5) zum offenen Ende hin einen Anschlag für die Verdickung hat.

10. Betätigungszug nach Anspruch 9,
dadurch gekennzeichnet, daß der Anschlag in dem offenen Ende (9) der Eingriffshülse (5) sitzt.

11. Betätigungszug nach einem der Ansprüche 1 bis 10̸,
dadurch gekennzeichnet, daß die Blockierhülse (13) in Richtung auf die Blockierstellung federbeaufschlagt ist.

## Claims

1. An actuating cable for the actuation of devices, particularly in vehicles, having the following features:
a) the actuating cable has an axially movable transmission run for the transmission of force;
b) the transmission run is attached via each of its end sections (1) to connection pieces (4) for connecting the transmission run at one end to an actuating organ and at the other end to an organ to be actuated;
c) at least one of the connection pieces (4) has an engagement section (10) which is provided with engagement elements (11);
d) the end section (1) which belongs to the connection piece (4) with the engagement section (10) has engagement elements (3) which are complementary to the engagement elements (11) of the connection piece (4);
e) the transmission run and the connection piece (4) with the engagement section (10) are axially movable in relation to each other in their unconnected state and are axially fixed in relation to each other in their connected state;
f) a locking sleeve (13) is provided which can be moved over the engagement section (10) from a release position, in which the connection piece (4) and the end section (1) can be brought into engagement with each other, into a locked position, and in this locked position holds the engagement elements (3, 10) of the end section (1) and the connection piece (4) in engagement; characterised by the following features:
g) the engagement section (10) is constructed as a dimensionally stable engagement sleeve (5);
h) the engagement sleeve (5) has an axial slot (8) at the side, via which the end section (1) can be introduced into the engagement sleeve (5).

2. An actuating cable according to claim 1,
characterised in that the axial slot (8) has a width less than that of the end section (1) and its boundary walls are constructed elastically in such a way that the end section (1) can be introduced into the engagement sleeve (5) with enlargement of the axial slot (8).

3. An actuating cable according to claim 1 or 2,
characterised in that the locking sleeve (13) comprises a locking projection (14) which extends as far as the outside of the end section (1) and engages in the axial slot (8).

4. An actuating cable according to claim 3,
characterised in that the axial slot (8) is widened in the region of the release position of the locking sleeve (13) so that the locking sleeve (13) can be twisted with the locking projection (14) in the widened portion.

5. An actuating cable according to any one of claims 1 to 4,
characterised in that the locking sleeve (13) is axially displaceably guided on the connection piece (4).

6. An actuating cable according to any one of claims 1 to 5,
characterised in that the engagement sleeve (5) is disposed at the end of the connection piece (4) facing the transmission run.

7. An actuating cable according to any one of claims 1 to 6,
characterised in that the engagement elements are constructed as engagement ribs (3, 11) disposed axially in series.

8. An actuating cable according to claim 7,
characterised in that the engagement ribs (3, 11) extend over the entire external circumference of the end section (1) and over the internal circumference of the engagement sleeve (5), respectively.

9. An actuating cable according to any one of claims 1 to 8,
characterised in that the end section (1) comprises a thickened portion (2) which engages in the engagement sleeve (5) and the engagement sleeve (5) has a stop, towards its open end, for the thickened portion.

10. An actuating cable according to claim 9,
characterised in that the stop is seated in the open end (9) of the engagement sleeve (5).

11. An actuating cable according to any one of claims 1 to 10,
characterised in that the locking sleeve (13) is spring-loaded towards the locked position.

## Revendications

1. Dispositif d'actionnement par traction pour actionner des organes, notamment sur des véhicules, présentant les caractéristiques suivantes :
a) le dispositif d'actionnement par traction présente une branche de transmission mobile dans la direction de l'axe pour transmettre la force ;
b) la branche de transmission est chaque fois reliée, par ses parties d'extrémité (1), à des éléments de liaison (4) pour faire la jonction de la branche de transmission, d'un côté, avec un organe d'actionnement et, de l'autre côté, avec un organe à actionner ; c) au moins l'un des éléments de liaison (4) présente une partie d'enclenchement (10) munie d'éléments d'enclenchement (11) ;
d) la partie d'extrémité (1) faisant partie de l'élément de liaison (4) muni de la partie d'enclenchement (10) présente des éléments d'enclenchement (3) complémentaires aux éléments d'enclenchement (11) de l'élément de liaison (4) ;
e) la branche de transmission et l'élément de liaison (4) muni de la partie d'enclenchement (10) sont mobiles l'un par rapport à l'autre dans la direction de l'axe lorsqu'ils ne sont pas reliés et ne sont pas mobiles l'un par rapport à l'autre dans la direction de l'axe lorsqu'ils sont reliés entre eux ;
f) une douille de blocage (13) est prévue, qui peut être mise d'une position de libération, dans laquelle l'élément de liaison (4) et la partie d'extrémité (1) peuvent être mis en prise l'un avec l'autre, dans une position de blocage par le biais de la partie d'enclenchement (10), et qui, dans cette position de blocage, maintient les éléments d'enclenchement (3, 10) de la partie d'extrémité (1) et de l'élément de liaison (4) en prise les uns avec les autres, caractérisé par les caractéristiques suivantes : g) la partie d'enclenchement (10) est réalisée en tant que douille d'enclenchement indéformable (5) ;
h) la douille d'enclenchement (5) comporte sur le côté une fente axiale (8), par le biais de laquelle la partie d'extrémité (1) peut être introduite dans la douille d'enclenchement (5).

2. Dispositif d'actionnement par traction selon la revendication 1, caractérisé en ce que la fente axiale (8) est moins large que la partie d'extrémité (1) et en ce que ses parois de délimitation sont réalisées avec une élasticité telle que la partie d'extrémité (1) peut être introduite dans la douille d'enclenchement (5) en étirant la fente axiale (8).

3. Dispositif d'actionnement par traction selon la revendication 1 ou 2, caractérisé en ce que la douille de blocage (13) présente une aile de blocage (14) s'enclenchant dans la fente axiale (8) et s'étendant jusqu'au côté extérieur de la partie d'extrémité (1).

4. Dispositif d'actionnement par traction selon la revendication 3, caractérisé cn ce que la fente axiale (8) est élargie de telle manière dans la zone de la position de libération de la douille de blocage (13) que la douille de blocage (13) peut tourner avec l'aile de blocage (14) dans la partie élargie.

5. Dispositif d'actionnement par traction selon l'une des revendications 1 à 4, caractérisé en ce que la douille de blocage (13) est guidée sur l'élément de liaison (4) de manière à pouvoir coulisser axialement.

6. Dispositif d'actionnement par traction selon l'une des revendications 1 à 5, caractérisé en ce que la douille d'enclenchement (5) est placée à l'extrémité de l'élément de liaison (4) qui est tournée vers la branche de transmission.

7. Dispositif d'actionnement par traction selon l'une des revendications 1 à 6, caractérisé en ce que les éléments d'enclenchement sont réalisés en tant que nervures d'enclenchements (3, 11) placées les unes derrière les autres axialement.

8. Dispositif d'actionnement par traction selon la revendication 7, caractérisé en ce que les nervures d'enclenchement (3, 11) s'étendent respectivement sur l'ensemble du pourtour extérieur de la partie d'extrémité (1) et sur le pourtour intérieur de la douille d'enclenchement (5).

9. Dispositif d'actionnement par traction selon l'une des revendications 1 à 8, caractérisé en ce que la partie d'extrémité (1) présente un épaississement (2) s'enclenchant dans la douille d'enclenchement (5), et en ce que la douille d'enclenchement (5) présente une butée pour l'épaississement vers l'extrémité ouverte.

10. Dispositif d'actionnement par traction selon la revendication 9, caractérisé en ce que la butée est placée dans l'extrémité ouverte (9) de la douille d'enclenchement (5).

11. Dispositif d'actionnement par traction selon l'une des revendications 1 à 10, caractérisé en ce que la douille de blocage (13) est sollicitée avec ressort en direction de la position de blocage.
